# FASCICULE DE BREVET EUROPEEN

(11) **EP 3 464 080 B1**
(45) Date de publication et mention de la délivrance du brevet: **03.03.2021**
(21) Numéro de dépôt: 17732972.9
(22) Date de dépôt: 24.05.2017
(51) Int. Cl.: B65B 63/02, B65B 55/20, B65B 43/52, B25J 9/00, B25J 9/02, B25J 15/02, B25J 15/00

(54) **DISPOSITIF ET PROCEDE D'EMPAQUETAGE D'ELEMENT DE CALAGE DANS UN CARTON**
VORRICHTUNG UND VERFAHREN ZUR VERPACKUNG EINES POLSTERUNGSELEMENTS IN EINEM KARTON
DEVICE AND METHOD FOR PACKING A CUSHIONING ELEMENT IN A CARTON

(30) Priorité: 27.05.2016 FR 1654813
(43) Date de publication de la demande: 10.04.2019
(73) Titulaire: GP System, 74940 Annecy-Le-Vieux (FR)
(72) Inventeur: PETERLINI, Jacky, 74940 Annecy-Le-Vieux (FR)
(74) Mandataire: Gasquet, Denis
(86) Numéro de dépôt international: PCT/FR2017/051285
(87) Numéro de publication internationale: WO 2017/203169

(56) Documents cités:
- EP-A1- 1 410 995
- EP-A1- 1 449 777
- FR-A1- 2 654 071
- FR-A1- 2 963 323
- US-A- 3 381 452
- US-A1- 2002 007 618
- US-A1- 2011 308 204

## Description

La présente invention concerne un dispositif d'empaquetage automatisé d'élément de calage dans un carton, ainsi que ses procédés de mise en œuvre.

La présence d'élément de calage, protège et enveloppe les articles à empaqueter dans un carton. Ces calages permettent de caler les vides à l'intérieur d'une caisse et ainsi d'absorber les chocs inhérents aux transports et aux éventuelles chutes.

Bien que le placement, la protection et remballage d'article dans des cartons deviennent de plus en plus automatisés, l'intervention d'opérateurs est souvent requise.

En général, la distribution de ces calages par des machines requiert la présence d'opérateurs pour ajuster la quantité de calage, orienter ces calages dans les espaces à combler, voire de les positionner à la main en sortie de machine, tel que dans l'enseignement du document US 6 718 729.

Pour assister l'opérateur dans ses tâches, des cellules de détermination des dimensions des cartons sont placées en amont des postes d'empaquetage, tel que le document US 5 829 231 qui divulgue la détermination des caractéristiques dimensionnelles des cartons par la lecture de codes barres ou le document EP 2 013 086 qui décrit la détermination de l'espace vide d'un container par une sonde appropriée.

Des systèmes automatisés de placement de calage dans des cartons ont été développés, tel que le document US 7 886 125 qui divulgue le positionnement vertical de papier matelassé par un piston, le document US 7 665 275 qui décrit la distribution d'élément de calage par un plan incliné, ou le document EP 2 204 325 qui décrit la distribution verticale d'une bande de papier d'une longueur déterminée selon la détermination préalable de l'espace vide du carton. Ces documents décrivent donc un placement aléatoire d'élément de calage dans un carton, n'assurant pas forcément un calage optimum des articles emballés.

Le document EP 2 370 319 divulgue le placement, par un bras préhenseur de sac en matière plastique produit à façon, selon la répartition de la géométrie de l'espace vide d'un carton. Ce système positionne de manière précise les éléments de calage autour des articles, mais n'assure pas un placement sous contraintes des éléments de calage, assurant un maintien en position des articles de manière compressée dans un carton Le document EP 1 410 995 A1 divulgue un dispositif de placement d'intercalaires dans un carton et sert de base pour le préambule de la revendication 1.

La présente invention propose ainsi un dispositif et des procédés d'empaquetage automatisé d'élément de calage dans un carton, permettant de pallier aux inconvénients précités. Ainsi le dispositif d'empaquetage automatique d'élément(s) de calage dans un carton, selon l'invention, tel que défini dans la revendication 1, est destiné à être monté le long d'un convoyeur dirigé selon un axe longitudinal.

Le dispositif d'empaquetage comprend une cellule robotisée associée à une zone de stockage d'élément de calage, la cellule robotisée comprenant au moins un moyen de préhension d'élément de calage, tandis que la zone de stockage est au moins un magasin comprenant au moins une cassette mobile selon un axe transversal d'une position de chargement vers une position de déchargement.

Ajoutons que la cellule robotisée est associée informatiquement par un automate au magasin.

Notons que la cellule robotisée est accolée selon l'axe transversal à au moins un magasin.

Précisons qu'en position de déchargement, une cassette est localisée en dessous d'au moins un moyen de préhension d'élément de calage.

Précisons également que la cellule robotisée comprend un châssis constitué de montants, tandis que le convoyeur est destiné à traverser de part en part les montants.

Selon un mode de réalisation, au moins une cassette est amovible.

Selon un mode d'exécution, au moins une cassette est associée à au moins un distributeur d'élément de calage dirigé selon un axe longitudinal.

Selon une caractéristique, au moins un moyen de préhension est mobile selon un axe vertical.

Selon une caractéristique supplémentaire, au moins un moyen de préhension comprend une pince comprenant deux mâchoires mobiles selon un axe longitudinal.

Selon un mode de réalisation, au moins un moyen de préhension est associé à un moyen de libération verticale d'un élément de calage.

Selon une caractéristique complémentaire, au moins un moyen de préhension est porté par deux platines mobiles selon des axes verticaux.

L'invention concerne également un procédé d'insertion d'au moins un élément de calage dans un carton, par un dispositif d'empaquetage selon l'invention, le procédé comprenant les étapes suivantes :
- déplacement vers l'intérieur, selon un axe transversal, d'une cassette, vers une position de déchargement,
- déplacement vers le bas, selon un axe vertical, d'un moyen de préhension d'élément de calage, jusqu'à sensiblement le fond d'une cassette en position de déchargement,
- chargement du moyen de préhension,
- déplacement vers le haut, selon un axe vertical, du moyen de préhension d'élément de calage chargé,
- déplacement vers l'extérieur, selon un axe transversal, de la cassette déchargée, d'une position de déchargement vers une position en attente de chargement,
- déplacement vers le bas, selon un axe vertical, du moyen de préhension d'élément de calage chargé,
- libération de l'élément de calage, et
- déplacement vers le haut, selon un axe vertical, du moyen de préhension d'élément de calage déchargé vers une position de chargement

Selon une caractéristique complémentaire, le procédé comprend une étape d'acquisition par un automate de la longueur, de la largeur et de la hauteur d'un carton pris en charge, tandis qu'il comprend, une étape de détermination du nombre et du type d'élément de calage à introduire dans le carton pris en charge.

D'autres caractéristiques et avantages de l'invention se dégageront de la description qui va suivre en regard des dessins annexés qui ne sont donnés qu'à titre d'exemples non limitatifs.

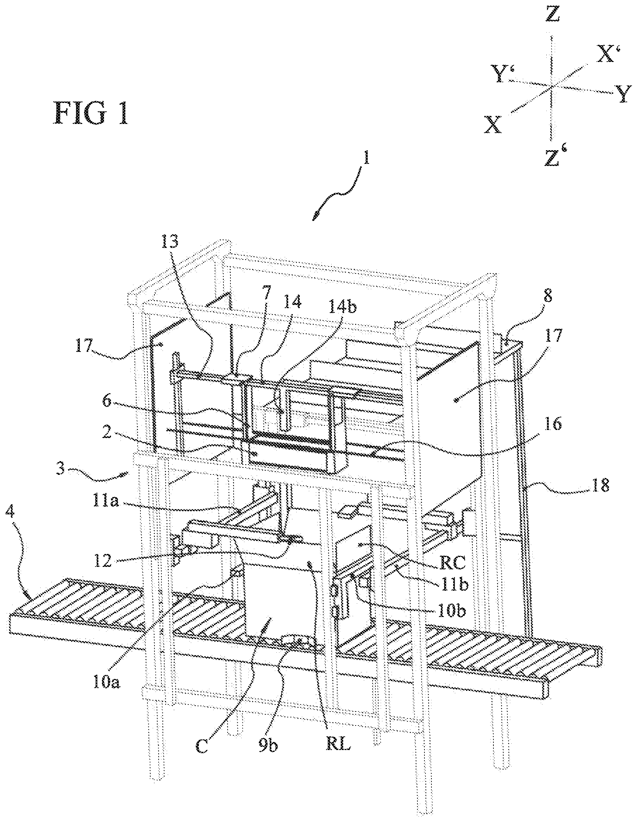

Les figures 1 à 6c sont des vues d'un dispositif d'empaquetage selon un mode de réalisation de l'invention.
La figure 1 est une vue en perspective du dispositif d'empaquetage.
La figure 2 est une vue latérale du dispositif d'empaquetage en position de chargement.
La figure 3 est une vue latérale du dispositif d'empaquetage en position de déchargement.
La figure 4 est une vue est une vue partielle en perspective du dispositif d'empaquetage, dans une position intermédiaire d'un moyen de préhension,
La figure 5 est une vue est une vue partielle en perspective du dispositif d'empaquetage, dans une position de libération d'un élément de calage.
La figure 6a est une vue partielle en perspective d'un moyen de préhension, dans une position intermédiaire.
La figure 6b est une vue partielle en perspective d'un moyen de préhension, dans une position basse.
La figure 6c est une vue en partielle en perspective d'un moyen de préhension, dans une position de libération d'un élément de calage.

Ainsi, le dispositif d'empaquetage (1) d'élément de calage (2) avantageusement élastiquement compressible dans un carton (C), selon le mode de réalisation illustré, se présente par une cellule robotisée (3) associée à au moins une zone de stockage d'élément de calage, qui se présente par au moins un magasin (18) équipé de cassette(s) (8) mobile(s).

Une cellule robotisée (3) selon l'invention comprend au moins un moyen de mise du carton (C) en un point zéro de référence, avantageusement au moins un moyen de détection des coordonnées des extrémités des rabats, avantageusement au moins un moyen d'ouverture partielle d'au moins un rabat, au moins un moyen de préhension.

Il est indifféremment utilisé, dans cette description, le terme de carton (C) pour désigner un récipient, une caisse ou un contenant dans lequel est empaqueté au moins un article et au moins un élément de calage (2).

On entend par point zéro, le point de référence représenté avantageusement par le centre du châssis de la cellule robotisée (3), à l'aplomb du convoyeur (4). Il est entendu qu'un point zéro peut être à tout endroit, selon la configuration de la cellule robotisée (3). La position du point zéro de référence peut changer selon le nombre d'élément de calage (2) à introduire, à savoir selon le nombre pair ou impair, tel qu'explicité plus en détail dans la suite de la description.

Il est considéré trois axes orthonormés au point zéro, à savoir un axe longitudinal (Y, Y'), un axe transversal (X, X') et un axe vertical (Z, Z'), ainsi qu'une succession d'axes parallèles à ces derniers définissant la position des différents éléments du dispositif d'empaquetage (1). Dans la suite de la description, ces différents axes parallèles étant nommés de la même manière.

Il est entendu par une position ou une direction extérieure ou intérieure, une position ou une direction éloignée ou proche respectivement, du point zéro.

Ajoutons que le dispositif d'empaquetage (1) selon l'invention comprend une cellule robotisée (3), destinée à être associée à un convoyeur (4) à bande ou à rouleaux, préférentiellement à rouleaux, qui achemine les cartons (C) selon un axe longitudinal (Y, Y'), au moins une zone de stockage d'élément de calage et avantageusement au moins un distributeur d'élément de calage (2).

De manière générale, on entend par un distributeur d'élément de calage (2), un dispositif qui distribue un élément avantageusement compressible.

Selon un mode de réalisation, le distributeur met en forme à partir d'une bande de papier repliée, un élément de calage (2), tel qu'explicité plus en détail dans la suite de la description.

Le dispositif d'empaquetage (1) comprend avantageusement un capteur de présence, pour la détection de l'arrivée d'un carton (C) au niveau de la cellule robotisée (3). Ce capteur de présence met notamment en fonctionnement les moyens de mise au point zéro, tel qu'explicité plus en détail dans la suite de la description.

Il est entendu que chacun des éléments mobiles est mû par un dispositif motorisé, tel que communément utilisé dans le domaine de la mécatronique, par exemple par des pistons, des glissières, des rails, des chaînes, des moteurs linéaires et/ou des courroies.

Selon l'invention le dispositif d'empaquetage (1) d'élément de calage (2) comprend au moins un moyen de détermination des dimensions d'un carton (C) préalablement à sa prise en charge par la cellule robotisée (3).

Selon une caractéristique, un moyen de détermination des dimensions d'un carton peut être la lecture de codes barres, la détermination de l'espace vide ou la détermination de la longueur, de la largeur et de la hauteur d'un carton, par des sondes appropriées.

L'empaquetage d'article dans un carton est communément réalisé manuellement ou accompli de manière semi-automatique.

Ainsi, les articles à emballer sont avantageusement placés, manuellement ou de manière automatisée, dans des cartons en amont de la prise en charge par le dispositif d'empaquetage (1).

En général, une ligne d'empaquetage, le long d'un convoyeur (4) ou une succession de postes indépendants, comprend tout d'abord une formeuse, mettant en forme les cartons pliés, et enfin avantageusement une fermeuse ou également appelée scotcheuse, fermant les rabats des cartons mécaniquement et les scellant par un adhésif.

Dans le cas d'une caisse sans rabat, un dispositif approprié positionne un couvercle sur cette dernière en sortie du dispositif d'empaquetage (1) selon l'invention.

Un carton (C) est composé de manière commune, de deux paires de rabats opposés, à savoir deux rabats dits courts (RC) et deux rabats dits longs (RL), reliés aux parois latérales correspondantes du carton (C).

Une caisse ne comprend pas de rabats, et est donc constituée de parois latérales, à savoir de deux parois dites longues et deux parois dites courtes, et d'une paroi de fond.

En sortie d'une formeuse, les rabats sont en position neutre, à savoir, dans le prolongement des parois latérales, perpendiculairement à la paroi de fond, de manière verticale.

Il est entendu par une position partiellement ouverte, voire ouverte des rabats, une position des rabats dirigée vers l'extérieur, tandis qu'il est entendu par une position partiellement fermée, voire fermée, une position des rabats, dirigée vers l'intérieur.

Un orienteur de cartons, également appelé changeur d'orientation, permettant la rotation et l'alignement des cartons dans un sens voulu, est avantageusement placé en amont du dispositif d'empaquetage (1) selon l'invention.

Un carton a généralement une section rectangulaire, composée de grands cotés et de petits cotés, à savoir de parois latérales dites longues et dites courtes respectivement. Un carton est convoyé en direction du dispositif d'empaquetage (1), préférentiellement dans le sens de la longueur, à savoir que les grands côtés sont dirigés selon l'axe longitudinal (Y, Y'), tandis que les petits cotés sont dirigés selon un axe transversal (X, X').

Il est entendu qu'un carton, ayant une section carrée, peut être pris en charge de la même manière que précédemment, sans sortir du cadre de l'invention.

Selon le mode de réalisation illustré, par soucis d'optimisation de temps de prise en charge d'un carton par le dispositif d'empaquetage (1) selon l'invention, on comprend que les cartons sont orientés dans le sens de la longueur afin de réduire le nombre d'élément de calage à introduire, ainsi ce sont les rabats longs (RL) qui sont partiellement ouverts, tandis que les rabats courts (RC) sont laissés dans leur position neutre d'arrivée, voir maintenu en position verticale par des moyens appropriés, tels qu'explicité plus en détail dans la suite de la description.

Il est entendu que les cartons pourraient être orientés dans le sens de la largeur, cependant un plus grand nombre d'élément de calage serait nécessaire pour caler les articles dans un carton, ce qui impliquerait un temps de prise en charge plus important, donc une cadence moins élevée, et nécessairement, pour des cartons de grande dimension, la largeur du convoyeur devrait être plus importante. Il est donc entendu que cette configuration n'est pas préférée.

Selon un mode de réalisation, un élément de calage (2) est un élément compressible ayant des propriétés élastiques.

Selon le mode de réalisation précédent, les éléments de calage (2) sont avantageusement des profilés creux, tels que des tubes de papier froissé, formés d'une bande de papier repliée sur elle-même, à savoir, assemblée sur ses bords latéraux et collés. Cette bande de papier est froissée tant dans une direction longitudinale, que radiale, par un distributeur approprié, tel que celui décrit par le document EP 1 539 474. Cette bande de papier est découpée selon une longueur déterminée selon préférentiellement la longueur ou la largeur d'un carton, à savoir de préférence une longueur supérieure à la longueur d'un carton (C), dans lequel au moins un élément de calage (2), ainsi produit, est positionné de manière compressée.

Les éléments de calage (2) peuvent être également de matière, de forme et de structure différente.

Les éléments de calage (2) sont préférentiellement de forme tubulaire, mais il pourrait en être autrement, telle que triangulaire, carré ou rectangulaire.

Ces éléments compressibles sont tout d'abord compressibles au moins longitudinalement par un moyen de préhension, afin d'être insérés dans un carton, préférentiellement placés parallèlement aux rabats longs (RL) d'un carton, mais il pourrait en être autrement, ces éléments compressibles sont placés parallèlement aux parois latérales, préférentiellement les parois dites longues.

Selon le mode de réalisation illustré, au moins un élément de calage (2) est positionné au moins au niveau d'une paire de rabats, préférentiellement les rabats courts (RC).

Selon un mode d'exécution, non représenté, dans le cas d'une caisse prise en charge, au moins un élément de calage (2) est positionné en compression au niveau des parois latérales dites courtes.

Ajoutons que selon des modes de réalisation, l'extrémité inférieure, d'au moins un élément de calage (2), est positionnée aux extrémités supérieures des parois latérales du carton.

Leurs propriétés élastiques leur permettent d'exercer une pression longitudinale contre les parois du carton et avantageusement les rabats agencés dans leur prolongement, assurant leur maintien en position à l'intérieur de ce dernier.

Précisons que le positionnement d'un élément de calage (2) contre les parois d'un carton de manière compressée, augmentent ses propriétés de résistance à la compression par rapport à un positionnement non compressé.

On entend par type d'élément de calage (2), une matière, une forme ou une longueur appropriée d'un élément de calage (2), à distribuer selon le dimensionnement du carton et selon notamment son positionnement, à savoir au fond du carton ou en surface de ce dernier.

Ces éléments compressibles sont également compressibles radialement lors de leur positionnement dans un carton, notamment les uns à coté des autres, préférentiellement dans le sens de la largeur et verticalement lors de la fermeture des rabats ou le positionnement d'un couvercle, assurant un maintien sous contrainte des articles emballés.

Dans le domaine de la mécatronique, on nomme un automate, plus précisément un automate programmable industriellement (API), un ordinateur gérant des entrées et des sorties physiques, utilisées pour automatiser des processus comme la commande de machines sur une ligne de montage ou le pilotage de systèmes de manutention automatique.

Un capteur, tel qu'un capteur de présence, ou une cellule, telle qu'une cellule de distance, sont des dispositifs transformant une grandeur physique en un signal, qui est transmis et interprété par un automate, pour commander dans le présent cas, le dispositif d'empaquetage (1).

Selon un mode de réalisation, l'automate détermine selon les dimensions du carton, la hauteur des rabats correspondants par la hauteur des parois latérales du carton, selon un tableau de référence, des dimensions standards des cartons usuellement employés, préenregistré dans l'automate,

Selon un autre mode de réalisation, l'automate détermine la hauteur des parois latérales d'un carton selon les coordonnées des extrémités des rabats, selon un tableau de référence, préenregistré dans l'automate, des dimensions standards des cartons usuellement employés.

Selon un mode d'exécution, les coordonnées des extrémités des parois latérales sont transmises à l'automate.

Ces dernières informations déterminent la course verticale d'au moins un moyen de préhension et/ou des platines (17), au vu de la libération d'un élément de calage (2) dans un carton, telle qu'explicitée plus en détail dans la suite de la description.

Selon le mode de réalisation illustré, la cellule robotisée (3) comprend un châssis constitué de montants, avantageusement au moins quatre montants, et de platines (17) avantageusement mobiles, de préférence, deux platines (17) parallèles agencées transversalement à l'axe longitudinal (Y, Y').

Selon une caractéristique, les platines (17) sont mobiles en translation selon des axes verticaux (Z, Z'),

Notons que les platines (17) portent au moins des rails, au moins un moyen de préhension d'élément de calage (2), et avantageusement au moins un moyen de libération verticale (14), tels qu'explicité plus en détail dans la suite de la description.

Selon le mode de réalisation précédent, la cellule robotisée (3) est ainsi surélevée par les montants, de telle manière à ce qu'une cassette (8) puisse évoluer en dessous des moyens de préhension, tandis que le convoyeur (4) est destiné à traverser les montants de la cellule robotisée (3), telle qu'explicité plus en détail ci-après.

La cellule robotisée (3) comprend ainsi une entrée et une sortie, destinées au passage du convoyeur (4).

En d'autres termes, selon le mode de réalisation illustré, au moins une partie de la cellule robotisée (3) est agencée à l'aplomb du convoyeur (4), à savoir que le convoyeur (4) traverse de part en part les montants du châssis, tandis que la cellule robotisée comprend au moins un moyen de préhension, préférentiellement au moins une pince (6) mobile selon un axe vertical (Z, Z'), constituée de mâchoires (7) mobiles en translation selon un axe longitudinal (Y, Y').

Précisons également que le dispositif d'empaquetage (1) comprend au moins une cassette (8) mobile en translation selon un axe transversal (X, X'), en tant qu'au moins une source d'approvisionnement d'élément de calage, agencée dans un magasin (18), en tant que zone de stockage d'élément de calage. Ces différents éléments seront décrits plus en détail dans la suite de la description.

Selon d'autres modes de réalisation, non représentés, un moyen de préhension comprend une première pince (6) constituée de mâchoires (7) mobiles en translation selon un axe longitudinal (Y, Y'), et une seconde pince constituée de mâchoires mobiles en translation selon un axe transversal (X, X'). Ces deux pinces étant destinées à saisir et compresser un élément de calage (2) dans les deux directions susmentionnées.

De préférence, le dispositif d'empaquetage (1) est équipé d'au moins deux cassettes (8), plus préférentiellement trois cassettes (8), voire quatre cassettes (8), destinées chacune à recevoir au moins un type d'élément de calage (2)

Ajoutons que selon le mode de réalisation illustré, au moins une cassette (8) est agencée dans un magasin (18) agencé dans le prolongement de la cellule robotisée (3), à savoir qu'au moins un magasin (18) est accolé à la cellule robotisée (3), selon l'axe transversale (X, X').

Notons que selon d'autres modes de réalisation, un dispositif d'empaquetage (1) comprend deux magasins (18) agencés en opposition par rapport à une cellule robotisée (3), en d'autres termes, une cellule robotisée (3) est entourée de part et d'autre de deux magasins (18) alignés selon l'axe transversal (X, X').

Selon les modes de réalisation précédents, chacun des magasins (18) est adapté à déplacer au moins une cassette (8) en regard de la cellule robotisée (3), à savoir à positionner alternativement une cassette (8) en dessous d'un moyen de préhension.

Il est entendu qu'une cassette (8) est destinée à venir se mouvoir en dessous d'un moyen de préhension, quand ce dernier est en position haute, dans une position de repos en attente de chargement.

Selon une caractéristique complémentaire, la cellule robotisée (3) est associée informatiquement par un automate au(x) magasin(s) (18).

Précisons également que selon un mode d'exécution, les montants de la cellule robotisée (3) sont solidaires, par au moins une liaison mécanique, à au moins un magasin (18).

Selon un mode de réalisation, non représenté, au moins une cassette (8) est amovible du magasin (18) qui la porte, afin d'être chargée en élément de calage (2), avantageusement par au moins un distributeur localisé à un autre endroit que le dispositif d'empaquetage selon l'invention. Un dispositif approprié charge et décharge ainsi au moins une cassette (8) dans un magasin (18), de manière automatisée ou de manière assistée par un opérateur.

Rappelons que la cellule robotisée (3) comprend au moins un moyen de préhension, de préférence au moins une pince (6), préférentiellement au moins deux pinces (6), plus préférentiellement au moins trois pinces (6), avantageusement quatre pinces (6), destinée(s) à alimenter verticalement un carton (C), préférentiellement selon sa largeur par au moins un, deux ou trois, voire quatre éléments de calage (2). Les pinces (6) sont toutes mobiles en translation selon des axes verticaux (Z, Z'), tandis que leurs mâchoires (7) sont mobiles en translation selon des axes longitudinaux (Y, Y').

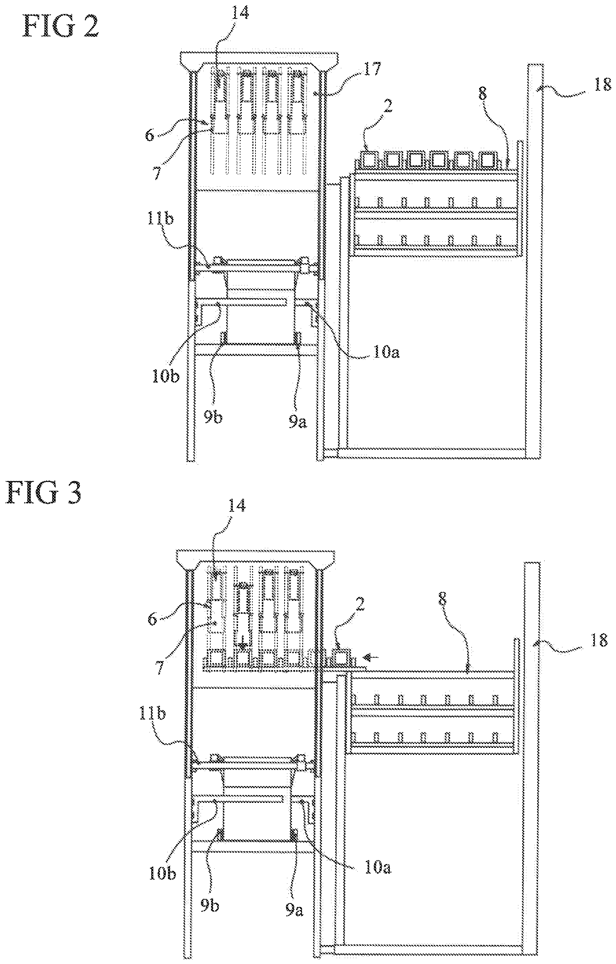

Précisons que les pinces (6) sont alignées les unes à cotés des autres, entres les platines (17) qui sont orientées selon des axes longitudinaux (Y, Y') telles qu'illustrées à la figure 2.

Précisons que les pinces (6) sont adaptées à saisir un élément de calage (2) à positionner dans un carton.

Selon une caractéristique supplémentaire, une zone de stockage est avantageusement associée à au moins un distributeur d'élément de calage (2), dirigé selon un axe longitudinal (Y, Y'), en regard d'au moins une cassette (8), mais il pourrait en être autrement, au moins une cassette (8) est alimentée par un stock d'élément de calage (2) produit préalablement.

De préférence, une zone de stockage est associée à au moins un distributeur, plus préférentiellement au moins deux distributeurs, localisés de part et d'autre d'un magasin (18).

Rappelons qu'afin d'être pris en charge, un carton requiert d'être aligné selon l'axe longitudinal (Y, Y') et selon l'axe transversal (X, X') par rapport à la cellule robotisée (3), à savoir positionné en un point zéro de prise en charge.

Selon le mode de réalisation illustré, au moins un moyen de mise au point zéro est constitué par au moins une butée (9a, 9b) mobile, avantageusement deux butées (9a, 9b), à savoir une première butée (9a) et une seconde butée (9b), mobiles en translation selon l'axe transversal (X, X'), tandis que deux bras (10a, 10b), à savoir un premier bras (10a) localisé à l'entrée de la cellule robotisée (3) et un second bras (10b) localisé à la sortie de la cellule robotisée (3), mobiles en translation selon un axe longitudinal (Y, Y') et selon un axe vertical (Z, Z'), centrent un carton (C) à prendre en charge, en un point zéro de référence déterminé.

Les butées (9a, 9b) sont mobiles avantageusement selon des mouvements simultanés de translation, qui se rapprochent et s'écartent selon le même débattement en opposition, tandis que le point zéro, selon l'axe transversal (X, X'), est contrôlé avantageusement par une vérification de courses identiques des butées (9a, 9b). Le carton centré au point zéro, est avantageusement gardé sous pression par les butées (9a, 9b), afin de conserver son positionnement lors de son chargement et libéré après chargement pour son convoyage vers une fermeuse ou un dispositif destiné au placement d'un couvercle.

Il est entendu qu'un opérateur peut fermer et sceller les rabats d'un carton ou positionner un couvercle sur une caisse.

Notons que selon le dimensionnement d'un carton, notamment pour un nombre impair d'élément de calage (2) à introduire, les butées (9a, 9b) déplacent simultanément le carton selon l'axe transversal (X, X') d'une distance avantageusement égale à la moitié de la largeur, à savoir la distance orientée selon un axe transversal (X, X'), d'un moyen de préhension, de préférence d'une pince (6).

Les moyens de mise au point zéro sont adaptés à positionner toute taille de carton.

Selon un mode d'exécution, les coordonnées des butées (9a, 9b), du premier bras (10a) et du second bras (10b), sont transmises à un automate, telles qu'explicitées plus en détail dans la suite de la description, afin de déterminer le dimensionnement d'un carton, à savoir la largeur, la longueur et la hauteur de ce dernier. L'automate détermine ainsi en fonction du dimensionnement du carton, le nombre et le type d'éléments de calage (2) à introduire.

Selon le mode de réalisation illustré, les butées (9a, 9b) sont connectées au convoyeur (4).

Le premier bras (10a) et le second bras (10b) peuvent prendre au moins deux positions verticales, à savoir une position haute de repos et une position basse de prise en charge.

Selon un mode de réalisation, le premier bras (10a) et le second bras (10b) peuvent également prendre une position intermédiaire de maintien des rabats, en regard de ces derniers, avantageusement des rabats courts (RC), afin de maintenir ces derniers en position verticale, lors des opérations de chargement d'au moins un élément de calage (2).

A l'arrivée d'un carton sur le convoyeur (4), le carton vient en butée contre le second bras (10b) en position basse, tandis que le premier bras (10a) vient se positionner en regard du second bras (10b), tandis que le premier bras (10a) et le second bras (10b) subissent chacun un mouvement de translation simultané et opposé en rapprochement, afin de positionner le carton pris en charge, au point zéro selon l'axe longitudinal (Y, Y').

Notons qu'au moins la gestion du centrage en un point zéro de référence d'un carton selon l'axe longitudinal (Y, Y'), par le premier bras (10a) et le second bras (10b), ainsi que selon l'axe transversal (X, X'), par les butées (9a, 9b), peut être réalisée selon au moins trois modes de fonctionnements.

Selon un mode de réalisation, la gestion du centrage au point zéro d'un carton est réalisée, par la transmission à l'automate du dimensionnement du carton, préalablement déterminé par un moyen de détermination des dimensions d'un carton. L'automate commande le déplacement des bras (10a, 10b) et des butées (9a, 9b) selon les informations transmises.

Selon un autre mode de réalisation, une cellule de distance, telle qu'explicitée plus en détail dans la suite de la description, agencée sur chacun des bras (10a, 10b), détecte et commande le déplacement des bras (10a, 10b) pour le centrage au point zéro d'un carton.

Selon un autre mode de réalisation, la gestion du centrage au point zéro d'un carton est réalisée par l'arrêt du premier bras (10a) et du second bras (10b), par une limitation de couple sur les moteurs des bras (10a, 10b) et par une vérification de courses identiques.

Ajoutons que selon le mode de réalisation illustré, la cellule robotisée (3) comprend un troisième bras (11a) et un quatrième bras (11b), mobiles en translation selon des axes transversaux (X, X') et selon des axes verticaux (Z, Z'), en tant que moyens d'ouverture partielle d'au moins un rabat, préférentiellement au moins un rabat long (RL).

Selon le mode de réalisation illustré, le troisième bras (11a) et le quatrième bras (11b) sont équipés à leurs extrémités respectives d'un volet (12) mobile en rotation, permettant l'ouverture de rabats agencés en opposition, préférentiellement les rabats longs (RL).

Selon un autre mode de réalisation, non représenté, le troisième bras (11a) et le quatrième bras (11b) sont équipés à leurs extrémités respectives d'au moins une saillie d'accrochage dirigée vers le bas, à savoir en direction du convoyeur, avantageusement deux saillies d'accrochage, se présentant sous la forme d'un crochet, permettant la saisie de l'extrémité d'un rabat, préférentiellement un rabat long (RL), au vu de son ouverture.

Les mouvements opposés de translation, vers l'extérieur, du troisième bras (11a) et du quatrième bras (11b) permettent l'ouverture au moins partielle des rabats agencés en correspondance, préférentiellement les rabats longs (RL).

Selon un mode de réalisation, tel qu'explicité précédemment, des cellules de distance, à savoir deux cellules de distance pour les rabats courts (RC) et deux cellules de distance pour les rabats longs (RL), déterminent les coordonnées des extrémités des rabats, au point zéro du carton, à sa prise en charge par la cellule robotisée (3).

Selon le mode de réalisation précédent, les coordonnées des extrémités des rabats courts (RC) sont avantageusement déterminées lors de la mise au point zéro par le premier bras (10a) et le second bras (10b), tandis que les coordonnées des extrémités des rabats longs (RL) sont déterminées préalablement à l'ouverture au moins partielle de ces derniers, par le troisième bras (11a) et le quatrième bras (11b).

Selon un mode de réalisation, une cellule de distance est localisée sur chacun des premier et second bras (10a, 10b), pour la détermination des coordonnées des extrémités, avantageusement, des rabats courts (RC), tandis qu'une cellule de distance est localisée sur chacun des troisième et quatrième bras (11a, 11b), pour la détermination des coordonnées des extrémités, avantageusement, des rabats longs (RL).

Selon un mode d'exécution, une cellule de distance est localisée sur chacun des premier et second bras (10a, 10b), pour la détermination des coordonnées des extrémités, avantageusement, des parois dites courtes, tandis qu'une cellule de distance est localisée sur chacun des troisième et quatrième bras (11a, 11b), pour la détermination des coordonnées des extrémités, avantageusement, des parois dites longues.

Selon des modes de réalisation, ces cellules de distances communiquent avec l'automate pour la détermination des coordonnées des extrémités des rabats ou des parois latérales, pour la détermination du dimensionnement du carton pris en charge, à savoir la largeur, la longueur et avantageusement la hauteur d'un carton. L'automate détermine ainsi en fonction du dimensionnement du carton, le nombre et le type d'élément de calage (2) à introduire.

Ainsi, selon des modes de réalisation, au moins un distributeur produit à la demande au moins un élément de calage (2), selon les informations transmises par l'automate. Un élément de calage (2) est alimenté dans au moins une cassette (8), tandis qu'au moins un moyen de préhension, de préférence au moins une pince (6) insert au moins un élément de calage (2) produit à la demande dans un carton (C), plus précisément une pince (6) insert un élément de calage (2).

Selon un mode de réalisation particulier, le dispositif d'empaquetage (1) selon l'invention, comprend une seul pince (6), tandis que se sont les butées (9a, 9b) qui déplacent le carton, selon l'axe transversal (X, X'), au vu de son remplissage par la répétition du processus de chargement d'au moins un élément de calage (2) par une seule et unique pince (6).

Selon d'autres modes de réalisation, au moins un distributeur produit un certain type d'élément de calage (2) dans au moins une cassette (8), à savoir qu'une cassette (8) est destinée à recevoir au moins un type d'élément de calage (2), tandis qu'au moins une pince (6) sélectionne au moins un élément de calage (2) positionné dans une cassette (8) déterminée selon les informations transmises par l'automate.

Selon une caractéristique, telle qu'illustrée à la figure 3, une cassette (8) se présente sous la forme d'un plateau sur lequel sont agencées des parties séparatrices avantageusement amovibles et modulables selon le type d'élément de calage (2) introduit. Ces parties séparatrices sont composées de parois verticales, maintenant en position et délimitant un emplacement d'un élément de calage (2) par rapport à un autre.

Rappelons qu'une cassette (8) est montée de manière mobile sur un magasin (18), permettant un mouvement de translation selon un axe transversal (X, X'), d'une position de chargement, vers une position de déchargement et vice-versa, telle qu'illustrée aux figures 2 et 3,

Précisons qu'une cassette (8) est préférentiellement mécanisée, dont son fonctionnement est géré par l'automate.

Précisons également que l'automate gère la synchronisation des déplacements des moyens de préhension et des cassettes (8), au vu du chargement et déchargement d'un élément de calage (2), par un moyen de préhension d'une cassette (8).

Une position de chargement correspond avantageusement à une position en regard d'un distributeur, tandis qu'une position de déchargement correspond à une position en regard d'au moins un moyen de préhension, préférentiellement d'au moins une pince (6).

Selon une caractéristique supplémentaire, une pince (6) est formée de deux mâchoires (7) mobiles en translation selon un axe longitudinal (Y, Y'). Une pince (6) est montée sur au moins un jeu de rails (13) selon des axes longitudinaux (Y, Y'), coulissants selon un axe vertical (Z, Z'), reliés de part et d'autre aux platines (17) avantageusement mobiles du châssis, permettant la montée et la descente verticale de cette dernière et le rapprochement et l'écartement des mâchoires (7) le long de ce jeu de rails (13).

Rappelons que les platines (17) étant mobiles en translation verticale, la descente des pinces peut être modulées selon la hauteur d'un carton.

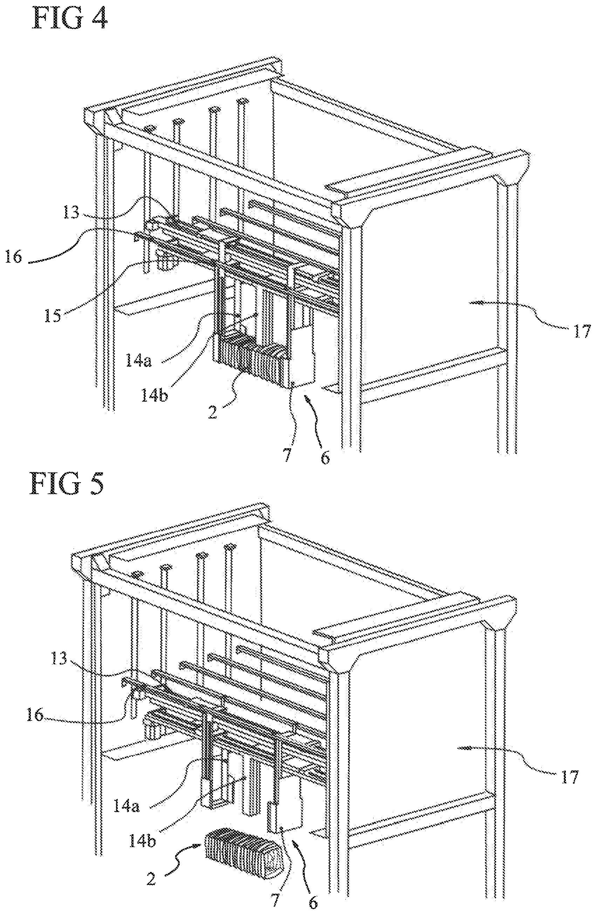

Une pince (6) est également équipée d'un moyen de libération verticale (14) d'un élément de calage (2), qui se présente, tel qu'illustré à la figure 4, par deux points latéraux d'appui (14a), agencés à l'intérieur des mâchoires (7) et avantageusement d'un point d'appui central (14b). De manière commune, un mécanisme adapté déplace soit les mâchoires (7) soit le moyen de libération verticale (14) l'un par rapport à l'autre de manière verticale, afin de libérer un élément de calage (2).

Selon un mode de réalisation, les mâchoires (7) sont fixes selon l'axe vertical (Z, Z') par rapport aux rails (13) qui les portent, tandis que le moyen de libération vertical (14) est mobile selon l'axe vertical (Z, Z'), mais il pourrait en être autrement, le moyen de libération vertical (14) est fixe selon l'axe vertical (Z, Z') par rapport aux rails (13) qui le porte, tandis que les mâchoires (7) sont mobiles selon l'axe vertical (Z, Z'), tel qu'illustré aux figures 4 à 6c.

Selon le mode de réalisation illustré notamment à la figure 4, le moyen de libération verticale (14) est fixé au jeu de rail (13), tandis que les mâchoires (7) sont connectées à l'extérieur du moyen de libération verticale (14) par des glissières. Les mâchoires (7) sont équipées de butées basses (15) agencées à leurs extrémités supérieures, qui s'étendent transversalement vers l'extérieur selon l'axe transversal (X, X'). Ces butées basses (15) sont destinées à interagir avec des traverses (16) disposées entre les platines (17),

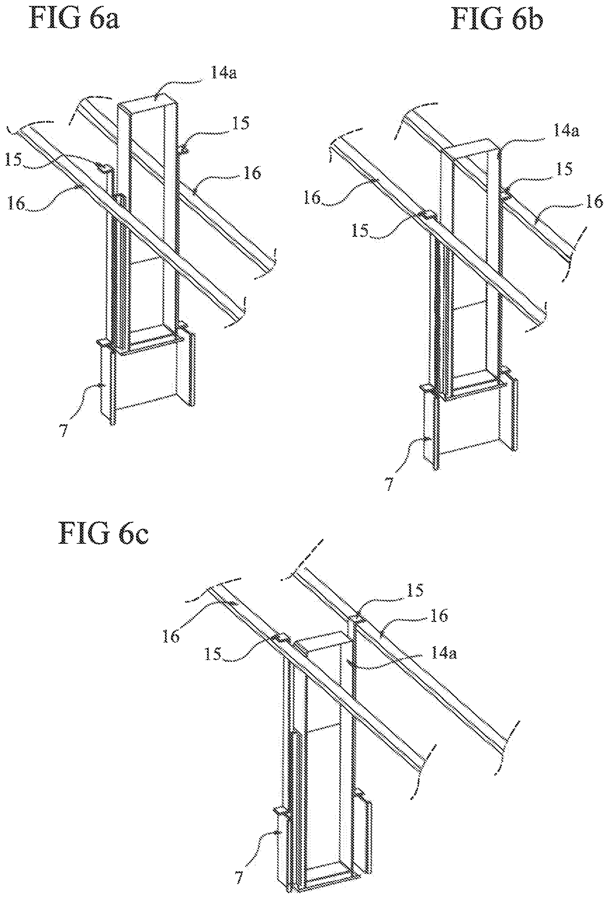

Selon le mode de réalisation précédent, la descente d'une pince par la descente du jeu de rail (13), induit l'interaction des butées basses (15) avec les traverses (16), les mâchoires (7) restant bloquées au niveau des traverses (16), tandis que le moyen de libération verticale (14) continue sa course vers le bas, libérant un élément de calage (2) dans le carton pris en charge, tel qu'illustré à la figure 5, et illustré plus en détail aux figures 6a à 6c.

Ainsi, un élément de calage (2) est avantageusement produit à la demande par un distributeur, distribué sur une cassette (8), compressé par une pince (6), qui le déplace verticalement et libéré par le moyen de libération verticale (14), au vue de son positionnement dans un carton (C), dans lequel il adopte une forme partiellement compressée, permettant son maintien en position contre au moins une paire de rabat, préférentiellement les rabats courts (RC), mais il pourrait en être autrement, un élément de calage (2) est maintenu en position par les extrémités des parois latérales dites courtes.

Ce positionnement assure qu'un moyen de préhension, lors de sa descente, n'endommage pas un ou des articles placé(s) dans un carton.

Les rabats longs (RL) sont donc positionnés de manière partiellement ouverte, afin que l'introduction d'élément de calage (2) dans un carton, ne bute pas contre l'extrémité d'un rabat long (RL), voire ferme un rabat long (RL) de manière non désirée.

Ces configurations de rabats en position partiellement ouverte pour les rabats longs (RL) et en position neutre pour les rabats courts (RC), induisent un placement des éléments de calage (2) dans le sens de la longueur du carton, à savoir qu'une pince (6) compresse longitudinalement un élément de calage (2). Ce mode de placement d'au moins un élément de calage (2), permet que les rabats courts (RC) agencés longitudinalement, dans une position neutre, n'interfère pas l'introduction d'un élément de calage (2), tandis que le positionnement de manière partiellement ouverte des rabats longs (RL), agencés transversalement à l'axe longitudinal (Y, Y'), ne gène également pas l'introduction d'un élément de calage (2), tel qu'explicité précédemment.

Ainsi au moins un dispositif d'empaquetage (1) selon l'invention permet la superposition d'au moins un élément de calage (2) à la surface d'au moins un article, préalablement à l'envoi par le convoyeur (4) du carton vers avantageusement une fermeuse, pour la fermeture et le scellement du carton.

Notons que la fermeture des rabats courts (RC) positionne et comprime au moins verticalement, au moins un élément de calage (2), au vu du maintien sous pression d'au moins un article dans un carton, mais il pourrait en être autrement le positionnement d'un couvercle positionne et comprime au moins verticalement, au moins un élément de calage (2).

Ainsi, la fermeture des rabats ou le placement d'un couvercle, permet à au moins un élément de calage (2) d'épouser sensiblement la forme d'au moins un article et de combler les espaces vides au-dessus de ce dernier.

L'invention concerne également un procédé de mise en œuvre du dispositif d'empaquetage (1) tel que défini dans la revendication 12.

Précisons que les procédés selon des modes de réalisation comprennent une étape de positionnement d'au moins un élément de calage (2) sous contraintes contre au moins les extrémités de deux parois latérales agencées en opposition, de préférence également contre les rabats agencés selon des axes transversaux (X, X'), préférentiellement les rabats courts (RC).

Rappelons qu'au moins la gestion du centrage au point zéro d'un carton selon l'axe longitudinal (Y, Y'), par le premier bras (10a) et le second bras (10b), ainsi que selon l'axe transversal (X, X'), par les butées (9a, 9b), peut être réalisée selon au moins trois modes de fonctionnements.

Selon un mode de réalisation, le procédé d'empaquetage automatisé d'élément de calage (2) dans un carton (C) par une cellule robotisée (3), comprend les étapes suivantes :
- déterminer les dimensions du carton avant sa prise en charge par la cellule robotisée (3), par un moyen de détermination des dimensions d'un carton,
- transmission des dimensions du carton à un automate qui détermine le nombre et le type d'élément de calage (2) à introduire,
- centrer en un point zéro, un carton sur un convoyeur (4) par rapport à la cellule robotisée (3), selon les dimensions du carton préalablement transmises à l'automate,
- insérer au moins un élément de calage (2) dans le carton, selon les informations préalablement déterminées,

Selon un autre mode de réalisation, le procédé d'empaquetage automatisé d'élément de calage (2) dans un carton (C) par une cellule robotisée (3), comprend les étapes suivantes :
- déterminer les coordonnées des extrémités des rabats longs (RL) et des rabats courts (RC) au point zéro,
- centrer en un point zéro, un carton sur un convoyeur (4) par rapport à la cellule robotisée (3),
- déterminer par un automate le type et le nombre d'élément de calage (2), à charger, selon les coordonnées des extrémités des rabats longs (RL) et des rabats courts (RC) au point zéro de référence,
- insérer au moins un élément de calage (2) dans le carton, selon les informations préalablement déterminées,

Selon un autre mode de réalisation, le procédé d'empaquetage automatisé d'élément de calage (2) dans un carton (C) par une cellule robotisée (3), comprend les étapes suivantes :
- centrer en un point zéro, un carton sur un convoyeur (4) par rapport à la cellule robotisée (3), par vérification de courses identiques des butées (9a, 9b), et des bras (10a, 10b), de manière indépendante,
- détermination de la hauteur du carton par une cellule de distance et transmission de cette information à un automate,
- transmission de la largeur et de la longueur du carton à un automate, selon les positions des butées (9a, 9b) et des bras (10a, 10b),
- insérer au moins un élément de calage (2) dans le carton, selon les informations préalablement déterminées,

Ajoutons que l'étape de mise au point zéro d'un carton, comprend les sous- étapes suivantes :
- mise en position basse du second bras (10b),
- avancer du carton tracté par le convoyeur (4) en butée du second bras (10b),
- mise en position basse du premier bras (10a),
- centrer le carton, selon l'axe longitudinal (Y, Y'), par le rapprochement du premier bras (10a) et du second bras (10b),
- avantageusement libération du carton centré selon l'axe longitudinal (Y, Y'), par écartement du premier bras (10a) et du second bras (10b),
- centrage du carton selon l'axe transversal (X, X') par le rapprochement simultané de la première butée (9a) et de la seconde butée (9b),
- mise en pression du carton par les butées (9a, 9b),

Notons que les procédés selon l'invention comprennent avantageusement une étape d'ouverture au moins partielle des rabats, avantageusement des rabats longs (RL), qui comprend les sous-étapes suivantes :
- déplacement du troisième bras (11a) selon au moins un axe vertical (Z, Z'), jusqu'à ce que la cellule de distance détermine les coordonnées du rabat long (RL) agencé en correspondance,
- déplacement du quatrième bras (11b) selon au moins un axe vertical (Z, Z'), jusqu'à ce que la cellule de distance détermine les coordonnées du rabat long (RL) agencé en correspondance,
- transmission à l'automate des coordonnées des extrémités des rabats longs (RL), pour le calcul de la largeur du carton,
- déplacement éventuel des butées (9a, 9b) pour un nombre impair d'élément de calage (2),
- déplacement du troisième bras (11a) et du quatrième bras (11b), selon un axe transversal (X, X') et verticaux (Z, Z'), afin de positionner les extrémités du troisième bras (11a) et du quatrième bras (11b), à savoir leurs au moins une saillie d'accrochage ou volet (12) respectif aux extrémités des rabats longs (RL) agencées en correspondance,
- déplacements vers l'extérieur, selon un axe transversal (X, X'), du troisième bras (11a) et du quatrième bras (11b), afin d'ouvrir au moins partiellement les rabats longs (RL),

Précisons que l'étape d'insertion d'au moins un élément de calage (2), comprend les sous-étapes suivantes :
- Acquisition par l'automate de la longueur, de la largeur et de la hauteur d'un carton pris en charge,
- détermination du nombre, du type et notamment de la longueur des éléments de calage (2), selon le dimensionnement d'un carton pris en charge,
- déplacement vers l'intérieur, selon un axe transversal (X, X'), d'une cassette (8), vers une position de déchargement,
- déplacement vers le bas, selon un axe vertical (Z, Z'), d'une pince (6), jusqu'à sensiblement le fond d'une cassette (8) en position de déchargement,
- rapprochement des mâchoires (7), selon un axe longitudinal (Y, Y'), selon un ratio dépendant de la longueur de l'élément de calage (2) produit, afin de le comprimer et le saisir,
- déplacement vers le haut, selon un axe vertical (Z, Z'), de la pince (6) chargée,
- déplacement vers l'extérieur, selon un axe transversal (X, X'), de la cassette (8) déchargée, d'une position de déchargement vers une position en attente de chargement,
- déplacement éventuel des platines (17) selon un axe (Z, Z') selon la hauteur du carton,
- déplacement vers le bas, selon un axe vertical (Z, Z'), de la pince (6) chargée,
- libération de l'élément de calage (2) par le moyen de libération verticale (14),
- écartement, selon un axe longitudinal (Y, Y'), des mâchoires (7) de la pince (6) déchargée,
- déplacement vers le haut, selon un axe vertical (Z, Z'), de la pince (6) déchargée vers une position de chargement,

## Revendications

1. Dispositif d'empaquetage (1) automatique d'élément(s) de calage (2) dans un carton (C), destiné à être monté le long d'un convoyeur (4) dirigé selon un axe longitudinal (Y, Y'), ledit dispositif d'empaquetage (1) comprenant une cellule robotisée (3) et une zone de stockage, ladite cellule robotisée (3) comprenant au moins un moyen de préhension d'élément de calage (2), la zone de stockage comprend au moins un magasin (18) le dispositif étant **caractérisé en ce que**, le magasin comprend au moins une cassette (8) mobile selon un axe transversal (X, X') d'une position de chargement en regard d'un distributeur d'éléments de calage (2) vers une position de déchargement en regard du moyen de préhension d'élément de calage (2), et le dispositif d'empaquetage (1) comprend des moyens de détermination des dimensions d'un carton et un automate configuré pour déterminer en fonction du dimensionnement du carton (C) un nombre et un type d'éléments de calage (2) à introduire dans le carton (C) et introduire lesdits éléments de calage (2) dans le carton (C).

2. Dispositif d'empaquetage (1) selon la revendication 1, **caractérisé en ce que** la cellule robotisée (3) est associée informatiquement par un automate au magasin (18).

3. Dispositif d'empaquetage (1) selon la revendication 1 ou 2, **caractérisé en ce que** la cellule robotisée (3) est accolée selon l'axe transversal (X, X') à au moins un magasin (18).

4. Dispositif d'empaquetage (1) selon l'une quelconque des revendications précédentes, **caractérisé en ce qu'**en position de déchargement, une cassette (8) est localisée en dessous d'au moins un moyen de préhension d'élément de calage (2).

5. Dispositif d'empaquetage (1) selon l'une quelconque des revendications précédentes, **caractérisé en ce que** la cellule robotisée (3) comprend un châssis constitué de montants, ledit convoyeur (4) étant destiné à traverser de part en part lesdits montants.

6. Dispositif d'empaquetage (1) selon l'une quelconque des revendications précédentes, **caractérisé en ce qu'**au moins une cassette (8) est amovible.

7. Dispositif d'empaquetage (1) selon l'une quelconque des revendications précédentes, **caractérisé en ce qu'**au moins une cassette (8) est associée à au moins un distributeur d'élément de calage (2) dirigé selon un axe longitudinal (Y, Y').

8. Dispositif d'empaquetage (1) selon l'une quelconque des revendications précédentes, **caractérisé en ce qu'**au moins un moyen de préhension est mobile selon un axe vertical (Z, Z').

9. Dispositif d'empaquetage (1) selon l'une quelconque des revendications précédentes, **caractérisé en ce qu'**au moins un moyen de préhension comprend une pince (6) comprenant deux mâchoires (7) mobiles selon un axe longitudinal (Y, Y').

10. Dispositif d'empaquetage (1) selon l'une quelconque des revendications précédentes, **caractérisé en ce qu'**au moins un moyen de préhension est associé à un moyen de libération verticale (14) d'un élément de calage (2).

11. Dispositif d'empaquetage (1) selon l'une quelconque des revendications précédentes, **caractérisé en ce qu'**au moins un moyen de préhension est porté par deux platines (17) mobiles selon des axes verticaux (Z, Z').

12. Procédé d'insertion d'au moins un élément de calage (2) dans un carton (C), par un dispositif d'empaquetage (1) selon l'une quelconque des revendications précédentes, ledit procédé comprenant les étapes suivantes :
- Déplacement vers l'intérieur, selon un axe transversal (X, X'), d'une cassette (8), vers une position de déchargement,
- déplacement vers le bas selon un axe vertical (Z, Z'), d'un moyen de préhension d'élément de calage (2), jusqu'à sensiblement le fond d'une cassette (8) en position de déchargement,
- chargement du moyen de préhension,
- déplacement vers le haut selon un axe vertical (Z, Z'), du moyen de préhension d'élément de calage (2) chargé,
- déplacement vers l'extérieur, selon un axe transversal (X, X') de la cassette (8) déchargée, d'une position de déchargement vers une position en attente de chargement,
- déplacement vers le bas selon un axe vertical (Z, Z'), du moyen de préhension d'élément de calage (2) chargé,
- libération de l'élément de calage (2), et
- déplacement vers le haut selon un axe vertical (Z, Z'), du moyen de préhension d'élément de calage (2) déchargé vers une position de chargement.

13. Procédé selon la revendication précédente, **caractérisé en ce qu'**il comprend une étape d'acquisition par l' automate de la longueur, de la largeur et de la hauteur d'un carton pris en charge.

14. Procédé selon la revendication précédente, **caractérisé en ce qu'**il comprend une étape de détermination du nombre et du type d'élément de calage (2) à introduire dans le carton (C) pris en charge.

## Patentansprüche

1. Vorrichtung (1) zum automatischen Verpacken von Verkeilungselement(en) (2) in einem Karton (C), die dazu bestimmt ist, entlang einer Fördereinrichtung (4) montiert zu werden, der in einer Längsachse (Y, Y') ausgerichtet ist, wobei die Verpackungsvorrichtung (1) eine Roboterzelle (3) und einen Lagerbereich umfasst, wobei die Roboterzelle (3) mindestens eine Greifeinrichtung zum Ergreifen von Verkeilungselementen (2) umfasst, wobei der Lagerbereich mindestens ein Magazin (18) umfasst, wobei die Vorrichtung **dadurch gekennzeichnet ist, dass** das Magazin mindestens eine Kassette (8) umfasst, die entlang einer Querachse (X, X') von einer Ladeposition, die einer Ausgabeeinrichtung für Verkeilungselemente (2) gegenüberliegt, in eine Entladeposition bewegbar ist, die der Greifeinrichtung zum Ergreifen von Verkeilungselementen (2) gegenüberliegt, und dass die Verpackungsvorrichtung (1) Mittel zum Bestimmen der Abmessungen eines Kartons und einen Automaten umfasst, der dazu ausgelegt ist, in Abhängigkeit von der Abmessung des Kartons (C) eine Anzahl und einen Typ von in den Karton (C) einzuführenden Verkeilungselementen (2) zu bestimmen und die Verkeilungselemente (2) in den Karton (C) einzuführen.

2. Verpackungsvorrichtung (1) nach Anspruch 1, **dadurch gekennzeichnet, dass** die Roboterzelle (3) durch einen Automaten rechnergestützt mit dem Magazin (18) verbunden ist.

3. Verpackungsvorrichtung (1) nach Anspruch 1 oder 2, **dadurch gekennzeichnet, dass** die Roboterzelle (3) entlang der Querachse (X, X') an mindestens ein Magazin (18) anschließt.

4. Verpackungsvorrichtung (1) nach einem der vorhergehenden Ansprüche, **dadurch gekennzeichnet, dass** in der Entladeposition eine Kassette (8) unterhalb mindestens einer Greifeinrichtung zum Ergreifen von Verkeilungselementen (2) angeordnet ist.

5. Verpackungsvorrichtung (1) nach einem der vorhergehenden Ansprüche, **dadurch gekennzeichnet, dass** die Roboterzelle (3) einen aus Ständern bestehenden Rahmen umfasst, wobei die Fördereinrichtung (4) dazu bestimmt ist, von einer Seite zur anderen durch die Ständer zu verlaufen.

6. Verpackungsvorrichtung (1) nach einem der vorhergehenden Ansprüche, **dadurch gekennzeichnet, dass** mindestens eine Kassette (8) herausnehmbar ist.

7. Verpackungsvorrichtung (1) nach einem der vorhergehenden Ansprüche, **dadurch gekennzeichnet, dass** mindestens eine Kassette (8) mindestens einer entlang einer Längsachse (Y, Y') ausgerichteten Ausgabeeinrichtung für Verkeilungselemente (2) zugeordnet ist.

8. Verpackungsvorrichtung (1) nach einem der vorhergehenden Ansprüche, **dadurch gekennzeichnet, dass** mindestens eine Greifeinrichtung entlang einer vertikalen Achse (Z, Z') bewegbar ist.

9. Verpackungsvorrichtung (1) nach einem der vorhergehenden Ansprüche, **dadurch gekennzeichnet, dass** mindestens eine Greifeinrichtung einen Greifer (6) mit zwei entlang einer Längsachse (Y, Y') beweglichen Backen (7) umfasst.

10. Verpackungsvorrichtung (1) nach einem der vorhergehenden Ansprüche, **dadurch gekennzeichnet, dass** mindestens eine Greifeinrichtung mit einer vertikalen Einrichtung (14) zum Freigeben eines Verkeilungselements (2) verknüpft ist.

11. Verpackungsvorrichtung (1) nach einem der vorhergehenden Ansprüche, **dadurch gekennzeichnet, dass** mindestens eine Greifeinrichtung von zwei entlang vertikaler Achsen (Z, Z') beweglichen Platten (17) getragen wird.

12. Verfahren zum Einbringen mindestens eines Verkeilungselements (2) in einen Karton (C) mittels einer Verpackungsvorrichtung (1) nach einem der vorhergehenden Ansprüche, wobei das Verfahren die folgenden Schritte umfasst:
- Verlagern einer Kassette (8) entlang einer Querachse (X, X') nach innen zu einer Entladeposition hin,
- Verlagern einer Greifeinrichtung zum Ergreifen von Verkeilungselementen (2) entlang einer vertikalen Achse (Z, Z') nach unten im Wesentlichen bis zum Boden einer Kassette (8) in der Entladeposition,
- Beladen der Greifeinrichtung,
- Verlagern der beladenen Greifeinrichtung zum Ergreifen von Verkeilungselementen (2) entlang einer vertikalen Achse (Z, Z') nach oben,
- Verlagern der entladenen Kassette (8) entlang einer Querachse (X, X') aus einer Entladeposition nach außen in eine Ladebereitschaftsposition,
- Verlagern der beladenen Greifeinrichtung zum Ergreifen von Verkeilungselementen (2) entlang einer vertikalen Achse (Z, Z') nach unten,
- Freigeben des Verkeilungselements (2), und
- Verlagern der entladenen Greifeinrichtung zum Ergreifen von Verkeilungselementen (2) entlang einer vertikalen Achse (Z, Z') nach oben in eine Ladeposition.

13. Verfahren nach dem vorhergehenden Anspruch, **dadurch gekennzeichnet, dass** es einen Schritt des Erfassens von Länge, Breite und Höhe eines übernommenen Kartons durch den Automaten umfasst.

14. Verfahren nach dem vorhergehenden Anspruch, **dadurch gekennzeichnet, dass** es einen Schritt des Bestimmens von Anzahl und Typ der in den übernommenen Karton (C) einzuführenden Verkeilungselementen (2) umfasst.

## Claims

1. Automatic packing device (1) for packing cushioning element(s) (2) in a carton (C), which is to be mounted along a conveyor (4) directed along a longitudinal axis (Y, Y'), said packing device (1) comprising a robotic cell (3) and a storage zone, said robotic cell (3) comprising at least one means for gripping a cushioning element (2), the storage zone comprising at least one magazine (18), the device being **characterised in that** the magazine comprises at least one cassette (8) which is movable along a transverse axis (X, X') from a loading position opposite a distributor of cushioning elements (2) to an unloading position opposite the means for gripping a cushioning element (2), and the packing device (1) comprises means for determining the dimensions of a carton and an automaton which is configured to determine, according to the size of the carton (C), a number and a type of cushioning elements (2) to be introduced into the carton (C), and to introduce said cushioning elements (2) into the carton (C).

2. Packing device (1) according to claim 1, **characterised in that** the robotic cell (3) is computationally associated by an automaton with the magazine (18).

3. Packing device (1) according to claim 1 or 2, **characterised in that** the robotic cell (3) is next to at least one magazine (18) along the transverse axis (X, X').

4. Packing device (1) according to any one of the preceding claims, **characterised in that**, in the unloading position, a cassette (8) is located beneath at least one means for gripping a cushioning element (2).

5. Packing device (1) according to any one of the preceding claims, **characterised in that** the robotic cell (3) comprises a chassis composed of uprights, said conveyor (4) being intended to pass between said uprights.

6. Packing device (1) according to any one of the preceding claims, **characterised in that** at least one cassette (8) is removable.

7. Packing device (1) according to any one of the preceding claims, **characterised in that** at least one cassette (8) is associated with at least one distributor of cushioning elements (2) which is directed along a longitudinal axis (Y, Y').

8. Packing device (1) according to any one of the preceding claims, **characterised in that** at least one gripping means is movable along a vertical axis (Z, Z').

9. Packing device (1) according to any one of the preceding claims, **characterised in that** at least one gripping means comprises a gripper (6) comprising two jaws (7) which are movable along a longitudinal axis (Y, Y').

10. Packing device (1) according to any one of the preceding claims, **characterised in that** at least one gripping means is associated with a vertical release means (14) for releasing a cushioning element (2).

11. Packing device (1) according to any one of the preceding claims, **characterised in that** at least one gripping means is carried by two plates (17) which are movable along vertical axes (Z, Z').

12. Method for inserting at least one cushioning element (2) into a carton (C), by means of a packing device (1) according to any one of the preceding claims, said method comprising the following steps:
- moving a cassette (8) inwards, along a transverse axis (X, X'), to an unloading position,
- moving a means for gripping a cushioning element (2) downwards along a vertical axis (Z, Z') substantially to the bottom of a cassette (8) in the unloading position,
- loading the gripping means,
- moving the loaded gripping means for a cushioning element (2) upwards along a vertical axis (Z, Z'),
- moving the unloaded cassette (8) outwards, along a transverse axis (X, X'), from an unloading position to a position awaiting loading,
- moving the loaded gripping means for a cushioning element (2) downwards along a vertical axis (Z, Z'),
- releasing the cushioning element (2), and
- moving the unloaded gripping means for a cushioning element (2) upwards along a vertical axis (Z, Z') to a loading position.

13. Method according to the preceding claim, **characterised in that** it comprises a step of acquisition by the automaton of the length, the width and the height of a loaded carton.

14. Method according to the preceding claim, **characterised in that** it comprises a step of determining the number and type of cushioning element (2) to be introduced into the carton (C) that is being dealt with.
